# EUROPEAN PATENT SPECIFICATION

(11) **EP 2 923 050 B1**
(45) Date of publication and mention of the grant of the patent: **13.12.2017**
(21) Application number: 13843990.6
(22) Date of filing: 02.10.2013
(51) Int. Cl.: F01N 3/20, B60W 10/00, B60W 10/10, F16H 59/78, F01N 3/021, F01N 3/10, F01N 9/00, F01N 11/00, F02D 41/02

(54) **REGULATION OF A TEMPERATURE IN AN EXHAUST AFTERTREATMENT SYSTEM**
REGELUNG EINER TEMPERATUR IN EINEM ABGASNACHBEHANDLUNGSSYSTEM
RÉGULATION D'UNE TEMPÉRATURE DANS UN SYSTÈME DE POST-TRAITEMENT DES GAZ D'ÉCHAPPEMENT

(30) Priority: 02.10.2012 SE 1251103
(43) Date of publication of application: 30.09.2015
(73) Proprietor: Scania CV AB, 151 87 Södertälje (SE)
(72) Inventor: STENLÅÅS, Ola, S-151 48 Södertälje (SE); ROOS, Fredrik, S-141 71 Segeltorp (SE)
(74) Representative: Scania CV AB
(86) International application number: PCT/SE2013/051143
(87) International publication number: WO 2014/055016

(56) References cited:
- DE-A1- 10 229 035
- DE-A1-102010 030 346
- GB-A- 2 397 539
- US-A1- 2004 044 457
- US-A1- 2004 123 589
- US-A1- 2004 237 513
- US-A1- 2005 166 580
- US-A1- 2006 096 280
- US-A1- 2008 016 856
- US-A1- 2009 288 398
- US-A1- 2009 301 061
- US-A1- 2011 136 620
- US-A1- 2012 046 841
- US-A1- 2012 046 841
- US-A1- 2012 059 572

## Description

### Technical field

The present invention pertains to a method for the regulation of a temperature in an exhaust system through control of a motor vehicle's driveline. Further, the invention pertains to a computer program, a computer program product, a system and a motor vehicle comprising such a system.

### Background of the invention

Laws and regulations for exhaust emission from motor vehicles have been drafted in many jurisdictions because of pollution and air quality, primarily in urban areas. These laws and regulations often consist of sets of requirements which define acceptable limits for exhaust emissions (emission standards) for motor vehicles equipped with combustion engines. For example, emission levels of nitrogen oxides (NOₓ), hydrocarbons (HC), carbon monoxide (CO) and particles are often regulated for most types of vehicles.

In order to meet such emission standards, the exhausts caused by the combustion in combustion engines are aftertreated (purified). By way of example, a so-called catalytic purification process may be used, which is why aftertreatment systems usually comprise a catalyst. Further, aftertreatment systems may, alternatively, or in combination with one or several catalysts comprise other components, such as one or several particulate filters.

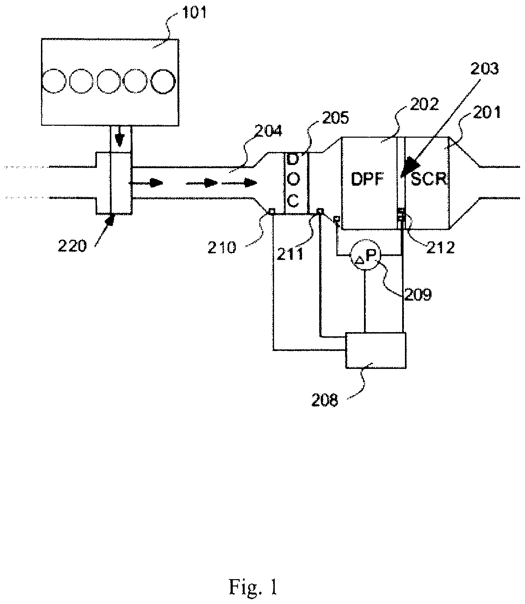

Figure 1 shows the combustion engine 101 of a motor vehicle 100, where the exhaust stream generated by the combustion is led via a turbocharger 220. The exhaust stream is subsequently led via a pipe 204 (indicated with arrows) to a particulate filter (Diesel Particulate Filter, DPF) 202 via a diesel oxidation catalyst (DOC) 205. Further, the aftertreatment system comprises an SCR catalyst 201 (Selective Catalytic Reduction, SRC), arranged downstream of the particulate filter 202, which uses ammonia (NH₃), or a composition from which ammonia may be generated/formed, as an additive for the reduction of the quantity of nitrogen oxides NOₓ. The particulate filter 202 may, alternatively, be arranged downstream of the SCR catalyst 201. The diesel oxidation catalyst DOC 205 has several functions and uses the surplus of air which the engine process generally creates in the exhaust stream as a chemical reactor jointly with a precious metal coating in the diesel oxidation catalyst. The said diesel oxidation catalyst is normally primarily used to oxidise remaining hydrocarbons and carbon monoxide in the exhaust stream into carbon dioxide, water and heat, and conversion of nitrogen monoxide into nitrogen dioxide.

In connection with combustion of fuel in the combustion engine's combustion chamber (cylinders), soot particles are formed. For this reason, the particulate filter is used to catch soot particles and thus functions so that the exhaust stream is led through a filter structure where soot particles are caught from the passing exhaust stream and stored in the particulate filter. The particulate filter is filled with soot as the vehicle is driven, and sooner or later the filter must be emptied of soot, which is usually achieved with the help of so-called regeneration. The said regeneration entails that the soot particles (mainly carbon particles) are converted into carbon dioxide and/or carbon monoxide in one or several chemical processes. Regeneration may occur in various ways and may for example occur with the help of so-called NO₂-based regeneration, often also called *passive regeneration,* or through so-called oxygen (O₂)-based regeneration, also called *active regeneration.*

In connection with passive regeneration, nitrogen oxide and carbon oxide are formed in a reaction between carbon and nitrogen dioxide according to e.g. equation 1:

NO₂ + C = NO + CO (1)

The passive regeneration, however, is heavily dependent on the availability of nitrogen dioxide. If the supply of nitrogen dioxide is reduced, the regeneration speed is also reduced. The supply of nitrogen dioxide may e.g. be reduced if the formation of nitrogen dioxide is hampered, which may e.g. occur if one or several components in the aftertreatment system are contaminated by sulphur, which normally occurs in at least some types of fuel, e.g. diesel. Competing chemical reactions also hamper the nitrogen dioxide transformation.

The advantage of passive regeneration is that desired reaction speeds and thus the speed at which the filter is emptied are achieved at lower temperatures. Typically, regeneration of the particulate filter during passive regeneration occurs at temperatures in the range of 200°C to 500°C, although temperatures in the higher part of this interval are normally preferable. Notwithstanding this, compared to the significantly lower temperature interval in active regeneration, this thus constitutes a great advantage if e.g. an SCR catalyst is present, since there is no risk that such a high temperature level is achieved that there is a risk of damage to the SCR catalyst. Nevertheless, it is important that a relatively high temperature is achieved in order for an effective passive regeneration to take place.

In the event of active regeneration, so-called oxygen (O₂)-based regeneration, a chemical process occurs mainly according to equation 2:

C + O₂ = CO₂ + heat (2)

Thus, carbon plus oxygen are converted, in active regeneration, into carbon dioxide plus heat. This chemical reaction, however, is heavily temperature-dependent and requires relatively high filter temperatures in order for a significant reaction speed to arise at all. Typically, a minimum particulate filter temperature of 500°C is required, but preferably the filter temperature should be even higher in order for regeneration to occur at the desired speed.

Often the maximum temperature which may be used in active regeneration is limited by tolerances for some of the components comprised in the aftertreatment system/exhaust system. For example, often the particulate filter 202 and/or (where applicable) a subsequent SCR catalyst have constructional limitations with regard to the maximum temperature they may be subjected to. This entails that the active regeneration may have a maximum component temperature which is often undesirably low. Simultaneously, a very high minimum temperature is required in order for any usable reaction speed to arise at all. In active regeneration, the soot load is normally essentially totally burned in the particulate filter 202. This means that a total regeneration of the particulate filter is obtained, following which the soot level in the particulate filter is essentially 0%. Today it is increasingly common for vehicles to be equipped, in addition to a particulate filter 202, with an SCR catalyst 201, which is why active regeneration may entail problems in the form of overheating for the subsequent SCR catalyst treatment process.

Depending on how a vehicle is driven, the temperature of the exhaust stream resulting from the combustion will vary. If the combustion engine works hard, the exhaust stream will maintain a higher temperature and vice versa if the load of the combustion engine is relatively low, the temperature of the exhaust stream will be significantly lower. If the vehicle is driven for a longer period of time in such a manner that the temperature of the exhaust stream maintains relatively low temperatures, such as temperatures below 150°C to 300°C, a degradation of the function of the diesel oxidation catalyst 205 will occur because the reaction of the sulphur which is usually present in the fuel in various forms with the active coating of the diesel oxidation catalyst 205, usually comprising one or several precious metals or other applicable metals such as e.g. aluminium. At temperatures below 150°C to 250°C, for example, an SCR catalyst will not function well. On the other hand, if the vehicle is driven for a longer period of time in such a manner that the exhaust stream's temperature maintains relatively high temperatures, this means that active regeneration may take place at the desired speed. However, the temperature in the exhaust stream may not exceed a maximum permitted temperature so that heat sensitive components in the aftertreatment system are damaged, as previously mentioned.

US 2011/0136620 A1 shows a system where an extended coasting condition may be confirmed and where entry conditions for a vehicle coast shutdown may include a charge state of a battery, engine temperature, emission control device temperature, etc.

DE 102 29 035 A1 shows a method comprising detecting engine braking and then disconnecting the engine by use of the clutch. The engine braking effect is then used or not according to slope and a compromise between saving fuel, pollution and brake wear.

### Brief description of the invention

One objective of the present invention is to provide a solution which wholly or partly resolves problems and/or disadvantages with solutions for the regulation of a temperature in an exhaust system according to prior art.

According to a first aspect of the invention, the said objective is achieved with a method for the regulation of a temperature in an exhaust system in a motor vehicle through control of its driveline, the motor vehicle of which comprises: a driveline comprising a combustion engine which may be connected to a gearbox via a clutch device, and an exhaust system arranged for the removal of an exhaust stream from the said combustion engine; where the said method comprises the step:
- control of the said driveline for activation or deactivation of coasting based on one or several first parameters *P*₁ and on one or several second parameters *P*₂ for the regulation of a temperature *T_{Ex}* in the said exhaust system; where
- at least one of the said one or several first parameters *P*₁ is a first temperature difference between a first temperature *T*₁ in the said exhaust system and a reference temperature *T_{Ref}*; and
the said second parameter *P*₂ is related to a calculated speed and/or a calculated road inclination over the road section ahead for the said motor vehicle.

Different embodiments of the above method are defined in the non-independent patent claims enclosed to the method. One method according to the invention may also be implemented in a computer program, which when executed in a computer achieves that the computer carries out the method according to the invention.

According to a second aspect of the invention, the above objective is achieved with a system arranged for the control of one or several functions in a motor vehicle, the motor vehicle of which comprises: a driveline comprising a combustion engine which may be connected to a gearbox via a clutch device, and an exhaust system arranged for the removal of an exhaust stream from the said combustion engine; where the said system comprises a control device arranged to control the said driveline for activation or deactivation of coasting based on one or several first parameters *P*₁ and one or several second parameters *P*₂ for the regulation of a temperature *T_{Ex}* in the said exhaust system, where
- at least one of the said one or several first parameters *P*₁ is a first temperature difference between a first temperature *T*₁ in the said exhaust system and a reference temperature *T_{Ref}*, and
the said second parameter *P*₂ is related to a calculated speed and/or a calculated road inclination over the road section ahead for the said motor vehicle.

The above mentioned system is preferably arranged in a motor vehicle, such as a bus, a truck or another similar motor vehicle.

With a method or a system according to the present invention, an improved solution for the regulation/control of a temperature in an exhaust stream in a motor vehicle is obtained. For example, the invention facilitates the regulation of the temperature in such operational cases where the regulation of the temperature has not been possible or sufficient with solutions according to prior art. This applies in particular to the operational cases where the engine has a low load or at low outdoor temperatures. An example of a low load on the engine is e.g. on dragging (engine braking) of the vehicle when air is pumped through the exhaust system.

With temperature regulation according to the present invention, it is possible for components in the exhaust system, such as particulate filters and catalysts, to work efficiently since the temperature in the exhaust system may be adapted quickly and with high precision to the said components' optimal operating temperature. The risk for components in the exhaust system to be damaged due to overheating is thus also reduced.

Further, the invention provides a more fuel efficient method of reaching a desired temperature or of maintaining/keeping a current temperature in the exhaust system compared to prior art. With regulation of the temperature through control of the driveline with one or several first parameters *P*₁ and one or several second parameters *P*₂, measures entailing a large fuel consumption may be avoided, such as activation of an external heater or engine regulation aimed at increasing the exhaust temperature by reducing the efficiency of the engine.

Another advantage of the invention is that it is not necessary to equip the vehicle with further parts/components in order to achieve the advantages of the invention since already existing parts/components in the vehicle may be used, which entails a cost saving.

Further advantages and embodiments of the invention are set out in the following detailed description.

### Brief description of figures

The present invention is described with reference to the enclosed figures where:
- Figure 1 is a schematic diagram of a system comprising a combustion engine and an exhaust system;
- Figure 2 is a schematic diagram of an example vehicle;
- Figure 3 is a schematic diagram of a gas flow in an engine system;
- Figure 4 is a schematic diagram of a control device; and
- Fig. 5 is a flow diagram of an embodiment of the invention.

### Detailed description of the invention

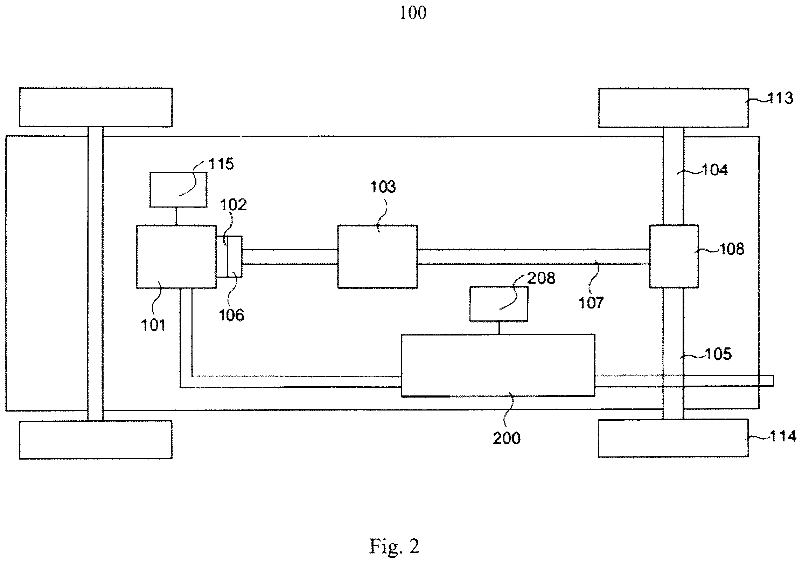

Fig. 2 is a schematic diagram of a motor vehicle 100, such as a truck, bus or other similar motor vehicle. The vehicle 100 schematically shown in Fig. 2 comprises a pair of front wheels 111, 112 and a pair of rear wheels with driving wheels 113, 114. The vehicle also comprises a driveline with a combustion engine 101 (e.g. a diesel engine), which via an output shaft 102 on the combustion engine is connected to a gearbox 103, for example via a clutch device 106. The clutch device may consist of an automatically controlled clutch and be controlled by the vehicle's control system via a control device 115, 208, which may also control the gearbox 103. An output shaft 107 from the gearbox 103 drives the driving wheels 113, 114 via a final drive 108, such as a differential, and drive shafts 104, 105 connected to the said final drive 108.

The vehicle 100 also has an exhaust system arranged to remove an exhaust stream generated by the combustion engine 101 on a combustion in the same. As showed in Fig. 1, the exhaust system may comprise an aftertreatment system (exhaust purification system) for the treatment (purification) of exhaust emissions from the combustion engine 101. However, it is not necessary for the exhaust system to comprise such an aftertreatment system, and in addition the exhaust system may comprise other parts/components, such as a turbo, a silencer system, and gas flow systems for EGR.

The gearbox 103 is usually a manual gearbox; an automatic gearbox, such as an automatic gearbox, automatic manual gearbox (Automatic Manual Transmission, AMT) or double clutch gearbox (Double Clutch Transmission, DCT); or a continuous variable gearbox (Continuous Variable Transmission/Infinitely Variable Transmission, CVT/IVT).

A manual gearbox 103 is a gearbox with a number of discrete gears and is arranged to be manoeuvred by the driver for engagement or disengagement of gears (e.g. forward and reverse gears).

An automatic gearbox also has a number of gears, i.e. it comprises several discrete gears. However, it differs from a manual gearbox in that it is controlled/manoeuvred by a control system comprising one or several control devices, also called ECUs (Electronic Control Unit). The control device or ECU is arranged to control the gearbox 103, for example when shifting from gear selection at a certain speed with a certain running resistance. Also, the ECU may measure the speed and torque of the engine 101 and the condition of the gearbox. Information from the engine or the gearbox may be sent to the ECU in the form of electric communications signals via, for example, a so-called CAN (Controller Area Network) bus installed in the motor vehicle 100.

The gearbox 103 has been illustrated schematically as one device. However, it should be noted that the gearbox may also physically consist of several cooperating gearboxes, for example a so-called range gearbox, a main gearbox and a split gearbox, which are arranged along the vehicle's driveline. Gearboxes according to the above may comprise any number of suitable discrete gears. Today's gearboxes for heavy goods vehicles usually have twelve forward gears, two reverse gears and one neutral gear.

A continuously variable gearbox, also called a CVT gearbox or IVT gearbox, is another type of well known gearbox which differs from the previous gearbox types, since it does not have a number of discrete gears corresponding to different gearings but instead has a continuously variable gearing. In this type of gearbox, gearing may thus within certain limits be controlled to the exact gearing desired.

In relation to upshifts and downshifts, an upshift means that a higher possible gear in the gearbox is selected while a downshift means that a lower possible gear in the gearbox is selected. This applies to gearboxes with several discrete gears. For continuously variable gearboxes, "fictitious" gear steps may be defined and the shifting gears may occur in the same manner as for a gearbox with discrete gear steps. However, the usual way of controlling such a continuously variable gearbox is to let the gearing vary depending on other relevant parameters. The control of such a gearbox is usually integrated with the control of the combustion engine's speed and torque, i.e. its operating point. A common method is to let control of the continuously variable gearbox be based on a current driving power requirement, e.g. calculated based on a gas pedal position and a speed for the vehicle, and which operating point gives the best effect in order to achieve the said driving power requirement. Gearing in the continuously variable gearbox thus becomes a result of which engine speed leads to the optimal operating point for the current driving power requirement. Aspects other than efficiency may also be taken into account in the choice of operating point for the engine. These may be e.g. driveability-related aspects, such as torque response times, i.e. how long it would take to achieve a higher driving wheel torque, or how much torque may be obtained during a certain time period.

One method according to the present invention for the regulation of a temperature in the exhaust system comprises the steps: control of a driveline for the activation or deactivation of coasting based on one or several first parameters *P*₁ and one or several second parameters *P*₂ for the regulation of a temperature *T_{Ex}* in an exhaust system; where at least one of the one or several first parameters *P*₁ is a first temperature difference between a first temperature *T*₁ in the exhaust system and a reference temperature *T_{Ref}*, and the second parameter *P*₂ is related to a calculated speed and/or a calculated road inclination over road sections ahead of the motor vehicle. The reference temperature *T_{Ref}* is, according to one embodiment of the invention, a desired temperature, i.e. a so-called setpoint temperature.

Activation of coasting entails that the vehicle's engine 101 is mechanically disconnected from the vehicle's driving wheels 110, 111, i.e. that the driveline is opened, while deactivation of coasting entails that the driveline is closed. Disconnection of the driving wheels from the engine may, for example, be achieved by putting the gearbox 103 in a neutral gear, or by opening the clutch device 106. In other words, essentially no power is transmitted through the gearbox from the engine to the driving wheels during coasting.

Control of a driveline for activation or deactivation of coasting means that a control system controls the driveline for this purpose, alternatively, that a driver of the vehicle activates/deactivates coasting guided by a presentation/indication system. The said presentation/indication system is arranged to present/indicate to the driver when it is suitable to activate/deactivate coasting according to the previous algorithm for control of the driveline. Thus the presentation/indication system entails a driver support for the driver ("driver support") while driving the vehicle. The presentation may, for example, involve visual, audio or tactile presentation/indication or combinations thereof with suitable arrangements for this purpose. Activation/deactivation of coasting may take place with a suitable control device which is manoeuvrable by the driver, such as a control button, a joystick, a control pad, a foot switch, etc.

The one or several first *P*₁ and second parameters *P*₂ are preferably used as in-parameters for a control algorithm arranged to control the temperature in the exhaust system at a desired value through control of the driveline (e.g. gearbox and clutch). The control algorithm may be of many different types and may be an algorithm which only looks at the first and second parameters and uses one or several threshold values (e.g. one higher and one lower threshold value) to determine which control measure should be taken. More advanced algorithms use additional parameters as described below.

With the use of one or several first parameters *P*₁ and second parameters *P*₂ for the regulation of a temperature *T_{Ex}* in an exhaust system through control of the driveline, the possibility of maintaining the temperature in e.g. the catalyst at a desired level is obtained, which thus guarantees certain emission levels from the vehicle. This may also be a fuel effective manner of controlling the temperature compared to other measures, such as deteriorating the combustion efficiency in the engine. Further, the invention entails that good driveability may be obtained since the second parameter is also used in controlling the driveline.

Preferred temperature intervals against which the temperature in the exhaust system is regulated according to one embodiment are for example temperatures above 200°C to 250°C for a good NOₓ conversion in SCR catalysts depending on the flow and SCR volume since a high flow and a low volume requires higher temperatures. For an efficient passive regeneration, the temperature must be above 250°C to 350°C depending on the NOₓ/PM quota (Particulate Matter) where a higher quota requires lower temperatures. However, the temperature in the exhaust system should preferably be maintained lower than 550°C to 600°C in order to avoid damaging components in the exhaust system.

Numerous different first parameters *P*₁ may be combined to control the driveline according to the invention, and thus according to one embodiment of the invention the one or several first parameters *P*₁ also chosen from among the group comprising:
- a first temperature *T*₁ which may be a temperature in an area of the exhaust stream or a surface, liquid or substrate temperature in any part or component of the exhaust system such as a particulate filter, catalyst, silencer, sensor, etc.; and
- a second temperature difference between the first temperature *T*₁ and a second temperature *T*₂ in the exhaust system. The second temperature *T*₂ is another temperature in the exhaust system than the first temperature *T*₁. However, this temperature *T*₂ may be a temperature in an area of the exhaust stream or a surface, liquid or substrate temperature in any part or component of the exhaust system such as a particulate filter, catalyst, silencer, sensor, etc.

According to another embodiment of the invention, the said reference temperature *T_{Ref}* is any of a temperature in a component in the said exhaust system, such as a temperature of a wall on an exhaust component; a temperature of a liquid injected in the said exhaust system, such as the temperature of injected urea, petrol or diesel; or a temperature in a component installed in connection with the said exhaust system, such as control devices, different types of sensors/givers and actuators. This is in order to obtain a good function of the components or processes and/or to avoid damaging the comprised or connected parts and components. According to another embodiment of the invention, a time derivative and/or a time integral of the first temperature difference and/or the second temperature difference is used. The use of a time derivative is advantageous if the control system is to react quickly to a temperature change while the use of a time integral instead entails that the control system takes into consideration long term trends in the temperature change which is advantageous for long term control of the temperature in the exhaust stream.

The above mentioned current temperature and temperature differences and functions thereof may be based on sensor values obtained from one or several sensors arranged at, in connection with or inside the exhaust system. Signals from sensors may be sent over, for example, a communications bus or a wireless link to one or several control devices for signal processing. The temperature differences and functions thereof may also be based on so-called virtual sensors, i.e. sensor values which are calculated from other real sensor signals with the use of one or several sensor models, which provides so-called current values. The advantage of using current temperatures values and temperature differences and functions thereof is that these may be used directly for the determination of the first parameter *P*₁ without complex or resource demanding calculations with the use of various simulation models. Thus these current values may also be obtained quickly.
Further, it is realised that the one or several first parameters *P*₁ may be calculated (predicted) values, e.g. selected from among the group comprising: a calculated first temperature *T*₁ which may be a calculated temperature in an area of the exhaust stream or a surface, liquid or substrate temperature in any part or component of the exhaust system such as a particulate filter, catalyst, silencer, sensor, etc.; a first calculated temperature difference between the first temperature *T*₁ and a reference temperature *T_{Ref}* in the exhaust system; a second calculated temperature difference between the first temperature *T*₁ and a second temperature *T*₂ in the exhaust system. The second calculated temperature *T*₂ is another temperature in the exhaust system than the first calculated temperature *T*₁. However, the second calculated temperature *T*₂ may also be a temperature in an area of the exhaust stream or a surface, liquid or substrate temperature in any part or component of the exhaust system such as a particulate filter, a catalyst, silencer, sensor etc.; and a time derivative and/or a time integral of the calculated first temperature *T*₁, or the first calculated temperature difference, or the second calculated temperature difference. The advantages of using time derivatives or time integrals of predicted values are the same as when using time derivatives and time integrals of current values.

By using one or several first calculated parameters *P*₁, information is obtained about how the relevant parameters will vary over time, which means that the system for the regulation of the temperature in the exhaust system may be controlled so that the desired temperatures may be obtained in the best possible manner in the future. This applies in particular to slow systems in which a temperature takes a long time to change, e.g. catalysts or other components, which require early measures for the avoidance of overshoots in the regulation of a temperature. The same advantages apply to calculated speed or road inclination.

Calculated parameters means that they are calculated or simulated in advance based on (mathematical) models of the vehicle and/or the components comprised in the vehicle. Based on one or several calculated first *P*₁ and second *P*₂ parameters, a control strategy for control of the driveline, in order to regulate the temperature in the exhaust system, may be selected among several different possible control strategies. By calculating/simulating how the parameters will vary over the road sections lying ahead for the vehicle according to one or several different control strategies, the control strategy which achieves certain requirements, e.g. that the temperature remains within a predefined limit value while being optimal from another perspective, such as fuel consumption, may be selected. The above therefore entails that the one or several first *P*₁ and second parameters *P*₂ may also be calculated based on one or several different future control strategies for the gearbox. This embodiment thus pertains to a feedback method where calculated parameters are used for further calculation of one or several control strategies based on one or several possible operating points, i.e. operating points which may possibly be used having regard to other requirements, such as driveability or fuel consumption. The said one or several control strategies are subsequently used in order to calculate new one or several first and/or second parameters or in order to update the existing parameters. Further, it should be noted that even if only one control strategy is calculated, information derived from this single control strategy may be used by the control system in order to determine whether it may reasonably be used, or whether it is better to let the vehicle be driven with the current operating point for the control of the driveline.

As mentioned above, the inventors have thus realised that the one or several first parameters *P*₁ are calculated over a road section ahead of the vehicle, for example by simulation over the road section ahead. According to this embodiment, the calculated first parameters *P*₁ may be determined based on one or several vehicle-specific and/or road-specific data for the vehicle. These may preferably be selected from the group comprising: inclination of the road ahead of the vehicle, curve radii of the road section ahead, speed limits of the road section ahead; motor vehicle weight; rolling resistance of the motor vehicle; air resistance of the motor vehicle; engine-specific data such as maximum output, minimum output, maximum torque, minimum torque, exhaust flow, exhaust gas recirculation content and lambda values (i.e. air/fuel mixture); and installation specific data such as the possible accumulation of substances and/or release of substances and/or conversion of substances in the exhaust system and a surface in the exhaust system in contact with the exhaust stream. Further, driver-interactive data which is related to the driver's driving style may be used in connection with the prediction of the one or several first parameters *P*₁, so that the vehicle's future behaviour is taken into account when the prediction is made. Examples of driver-interactive data include: the use of blinkers, gas pedal position, and use of brakes.

One advantage with the use of vehicle-specific and/or road-specific data for control is that the system may determine in advance whether any control strategy for one or several functions (e.g. gearing, external load, external heater, regulations of flow, etc.) needs to be used to avoid that the temperature ends up outside a preferred temperature range. Thus, the use of unnecessary control strategies is avoided and also the system may act proactively in the event any measure should be required, i.e. the system may act in advance.

According to one special embodiment, the first temperature *T*₁ is a temperature in the exhaust stream and the second temperature *T*₂ is a surface, liquid or substrate temperature in the exhaust system. A surface temperature is a temperature on a surface of the exhaust system or a part thereof, which impacts the heat conductivity (losses) from the exhausts and the heating of components in the exhaust system. Liquid temperature means the temperature in a liquid present in the exhaust system, such as urea or water. This temperature impacts the heat conductivity to the liquid and thus the evaporation of the same. The latter temperature, the substrate temperature, means the temperature in a material in e.g. a catalyst, a particulate filter, or in a NOₓ trap. The substrate temperature impacts the heat conductivity to the exhaust treatment system and the exhaust treatment system's function (i.e. the physical and chemical processes). The first *T*₁ and the second *T*₂ temperature may be a current or a calculated first *T*₁ or second *T*₂ temperature.

Further, it should be understood that the one or first parameters *P*₁ used in the control of the driveline may consist of only current values, or consist of only calculated values, or be a combination of current and calculated values depending on the application.

Activation or deactivation of coasting may according to one embodiment of the invention take place with the use of one or several threshold values against which the one or several first parameters *P*₁ and/or second parameters *P*₂ are compared. The threshold values usually specify limit values which must not be undershot or exceeded, and if the temperature passes such a threshold value a temperature regulating measure is taken by the system. If temperature increasing or temperature maintaining measures need to be taken, coasting is activated if a value for at least one of the one or several first parameters *P*₁ or second parameters *P*₂ is below a threshold value *P_{T},* according to one embodiment of the invention.

The second parameter *P*₂ relates to a calculated speed and/or a calculated road inclination for the said motor vehicle over the road section ahead as mentioned above. Coasting in other situations than when the vehicle may maintain, or essentially maintain, a desired speed results in very poor driveability and is therefore not desirable. It should be realised that the one or several first parameters *P*₁ are not alone in determining whether coasting should be activated according to the invention. Usually the most important condition is that the vehicle must be able to maintain a desired speed with coasting activated since driveability is otherwise too poor. Other conditions are also relevant, which means that real systems use the temperature in the exhaust steam as one of several parameters when deciding whether or not coasting should be activated. Deactivation of coasting may, however, be carried out independently of the vehicle's speed, the road inclination, etc.

A coasting algorithm according to one embodiment of the invention may have the following in-parameters: road inclination, vehicle weight, rolling resistance, air resistance, set speed (i.e. desired speed), brake speed (dhsc speed). Based on these parameters, the system calculates the duration for which the vehicle may coast before the vehicle reaches a too low speed, for example; coasting is activated if the duration exceeds a time threshold value. The present invention may, for example, be implemented so that the coasting duration is dependent on or impacted by the temperature in the exhaust system. If the temperature in the exhaust system takes on a value above a threshold value the system requires longer durations (i.e. more difficult to coast), and if the temperature is below the threshold then the system reduces the duration requirement (i.e. easier and more frequent coasting). It is also conceivable that the temperature parameter may control the speed limits which the coasting algorithm uses. If it is cold in the exhaust system, the system may, for example, tolerate that the vehicle loses more speed while coasting, and thus the coasting algorithm becomes more active, i.e. coasting is more frequent, all other things being equal.

Other additional parameters which are useful in the control of the driveline for activation or deactivation of coasting in regulating the temperature in the exhaust system is a requested engine power, since coasting is activated when the requested engine or propulsion power is low. Otherwise the driving experience/driveability becomes too poor, and a requested engine torque in analogy with the above reasoning.

When controlling the exhaust flow with the one or several first parameters, measures may be taken to control the engine when the decoupling is activated for quicker and more precise temperature regulation in the exhaust system. In order to achieve the desired objective, the engine must be controlled according to the following principles: increased engine speed, and thus increased exhaust flow, if the temperature *T_{Ex}* in the exhaust system is to be reduced; and reduction of the engine speed, and thus a reduction of the exhaust flow, if the temperature is to be increased or maintained. In some systems the engine may be controlled all the way down to zero (0) in engine speed (i.e. engine switched off), which means that the flow is reduced to a minimum. In other systems the engine may not be switched off entirely, instead the lowest speed is limited to the engine's idling speed (e.g. 500 rpm). This embodiment may be realised by increasing the gearing if a value for the one or several first parameters *P*₁ exceeds a first threshold value, and the gearing is instead reduced if a value for the one or several first parameters *P*₁ is below a second threshold value. The first and second threshold values may assume, or be dependent on, a value within, or in the vicinity of the temperature range which was previously discussed, i.e. above 200°C to 250°C for NOₓ conversion; above 250°C to 350°C for passive regeneration; and below 550°C to 600°C to avoid damaging components in the exhaust system.

The inventors have also realised that the one or several first parameters *P*₁ are suitable for the control of other functions in the vehicle for the regulation of the temperature *T_{Ex}* at the same time as coasting is activated. These functions must have a direct or indirect impact on the temperature in the exhaust system *T_{Ex}.* Thus, the regulation of the temperature in the exhaust system *T_{Ex}* may be more efficient and quicker. Suitable functions are related to: external load; conversion of exhaust heat into energy; external heating of the exhaust system; injection of fuel into the engine; and regulation of the exhaust flow. It should be realised that the one or several first parameters *P*₁ may be used to control such a function or a combination of two or several such functions.

Examples of external load which may be controlled with the one or several first parameters *P*₁ when coasting is activated are auxiliaries such as a water pump, fan or compressor; generator; hybrid generator or similar energy recycling system; retarder, exhaust brake or other auxiliary brakes. According to the invention, the external load must be arranged on the engine side of the clutch device/gearbox since all loads which are located on the output side of the gearbox will not be able to impact the engine when coasting is activated since the driveline is open.

In coasting, the operating point in the engine may be selected freely with respect to the engine speed, while the system is normally limited to idling load with respect to engine torque.

However, with an external load, the engine's torque may be impacted and thus the freedom in selecting an operating point when coasting may be further increased. In some cases, the external load is of the "on" or "off" type, i.e. it is either activated or not, and in these cases the control and calculation of the operating point is limited to determining whether or not the external load should be activated. If the temperature *T_{Ex}* in the exhaust system is to be increased, the external load must be increased according to one embodiment of the invention, which is suitable if the temperature in the exhaust system is too low so that particulate filters and catalysts work at too low temperatures.

The one or several first parameters *P*₁ may be used for the control of an external system arranged for conversion of exhaust heat into energy (Waste Heat Recovery, WHR). The regulation of the temperature with the external system for the conversion of exhaust heat into energy takes place according to one embodiment by the maximum energy in relation to the input energy, or total converted energy being taken out via the external system. This regulation is preferably aimed at maximising the heat conduction into the external system and is designed for example as a PID or MPC regulator (Proportional Integral Derivative, PID; Model Predictive Control, MPC).

According to another embodiment of the invention, the external system for conversion of exhaust heat into energy is installed upstream in the exhaust system in relation to an area in which a certain temperature is desired to be obtained. When the external system is installed according to this embodiment it is controlled so that the external system acts in a normal mode if the temperature *T_{Ex}* in the exhaust system is to be reduced, and in an opposite mode if the temperature in the exhaust system *T_{Ex}* is to be increased. Normal mode means that the external system uses waste energy, e.g. heat from the exhausts, in order to generate electric or mechanic energy (and sometimes chemical energy). Where the external system operates in the opposite (reverse) mode, this means that the external system is instead supplied with energy in order to increase the temperature of the exhausts.

Further, the one or several first parameters *P*₁ may be used for the control of at least one external heater for the exhaust system. The external heater's task is to increase the temperature in the exhaust flow or any part/component in the exhaust system. Preferably, the external heater is:
- a burner installed in the exhaust system after the combustion engine's cylinders;
- a system arranged for the injection of hydrocarbons for oxidation or combustion on a catalyst placed in the exhaust system;
- an electric heater installed in the exhaust system after the combustion engine's cylinders; or
- any other suitable external heater installed in, or in close connection with the exhaust system.

The external heater is preferably controlled so that a maximum temperature increase is obtained in relation to the input energy or so that the temperature increase is maximised. However, the external heater may instead be controlled so that the temperature increase speed is prioritised. The control of the external heater may be configured as a PID or MPC regulator.

As mentioned above, the one or several first parameters *P*₁ may also be used to control a fuel injection system arranged for the injection of fuel to the combustion engine. This may occur through control of the number of post-injections, the time (CAD) for the post-injections, the pressure of the post-injections, and the fuel amount per post-injection. The control of the fuel injection system may be implemented as pre-controlled or feedback control with e.g. MAP (matrix based regulation structure), PID or MPC. As a setpoint for this control, a temperature which is downstream of the engine as well as a component in the exhaust system, e.g. a diesel oxidation catalyst (DOC) or temperature difference over the said component in the exhaust system, may be used. According to one embodiment, the control of fuel injection compensates for the efficiency (in the DOC) in the transition between chemical energy tied in the fuel to heat energy emitted by the exhausts.

Another factor impacting the temperature in the exhaust system *T_{Ex}* is the characteristics for the exhaust flow in the exhaust stream. For this reason, the one or several first parameters *P*₁ may also be used for the control of the exhaust flow, or one of the exhaust flows depending on the parameter, such as heat transfer coefficients.

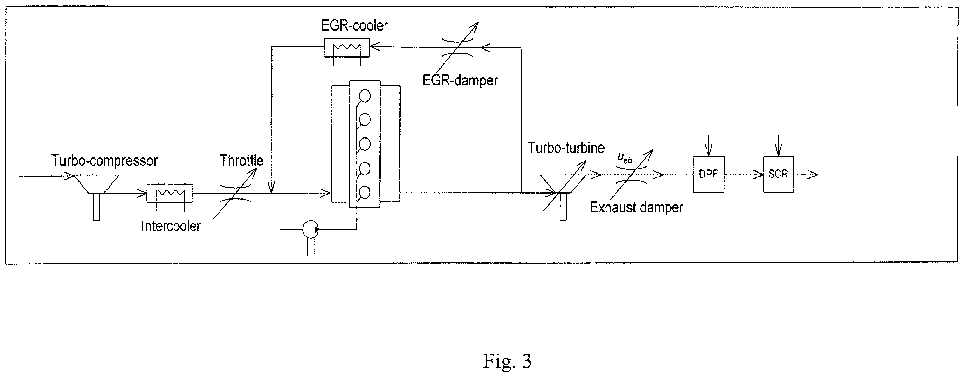

Control of the exhaust flow may for example occur through control of a gas flow system for exhaust gas recirculation (EGR) and/or through control of an intake system for the engine. Fig. 3 shows schematically a general gas flow in an engine system, where the engine system in this example comprises a diesel engine with a turbo and a number of pipes connected to the engine. Air is sucked in from the left in Fig. 3 with an intake system for the engine. The air which is sucked in passes through an intake pipe and is compressed in a turbocharger in order to be cooled subsequently by an intercooler before it passes, in certain cases, a throttle butterfly that regulates the amount of air into the diesel engine. The air is then mixed with recirculated exhausts with a gas flow system for exhaust gas recirculation (EGR) and this mixture is then sucked into the engine's cylinders in order to be mixed with diesel or another fuel before combustion occurs in the engine.

The exhausts from the combustion process then pass through a turbo turbine which sets the turbocharger into motion. Parts of the exhausts, however, enter into an EGR pipe and are led back to the intake pipe via an EGR damper and one or several EGR coolers. The EGR damper's function is to regulate the amount of recirculated exhausts back to the combustion process. When the EGR gases are cooled, the use of EGR will move heat energy from the exhausts to the engine's cooling system. Before the exhausts disappear entirely from the engine system, in some engines they pass through an exhaust damper (if installed) which controls the pressure in an exhaust collector (not shown in the figure). Subsequently, the exhausts pass through an aftertreatment system which may contain a diesel particulate filter and/or an SCR catalyst as mentioned previously. If the engine 101 is not heavily loaded, the exhausts will have a lower temperature than desired and thus cool the catalyst. One way of limiting the amount of cooling exhausts is to use a damper arranged in an intake pipe for air to the engine. Thus, the amount of air entering the engine may be limited, which in turn means the exhausts exiting the engine are also limited, which, with a given load, results in warmer exhausts. This damper is usually called a throttle butterfly, as mentioned above. The amount of air which the engine consumes is determined to a large extent by the speed of the engine, which in this case means that: the higher the engine speed, the more air flow is required to the engine.

According to the present invention, the one or several parameters *P*₁ may be used to control the gas flow system for exhaust gas recirculation (EGR) and/or the air intake system arranged for the regulation of an air flow to the engine. In addition, the control of the gas flow system for exhaust gas recirculation (EGR) and the intake system may be controlled with additional parameters related to a transferred output to a component installed in the said exhaust system and/or emissions produced by the said combustion engine. Emissions in this context mean, for example, exhausts and noise. Further, a reduction of the exhaust flow may be combined with an increase of the engine load to increase the temperature in the exhaust system. This embodiment may be realised with, for example, a pre-controlled or feedback control of an exhaust brake with the use of: a setpoint value for the temperature or a value which is a function of the said setpoint value for the temperature; or a setpoint value for the energy content of the exhausts or with a value as a function of the said setpoint value for energy content.

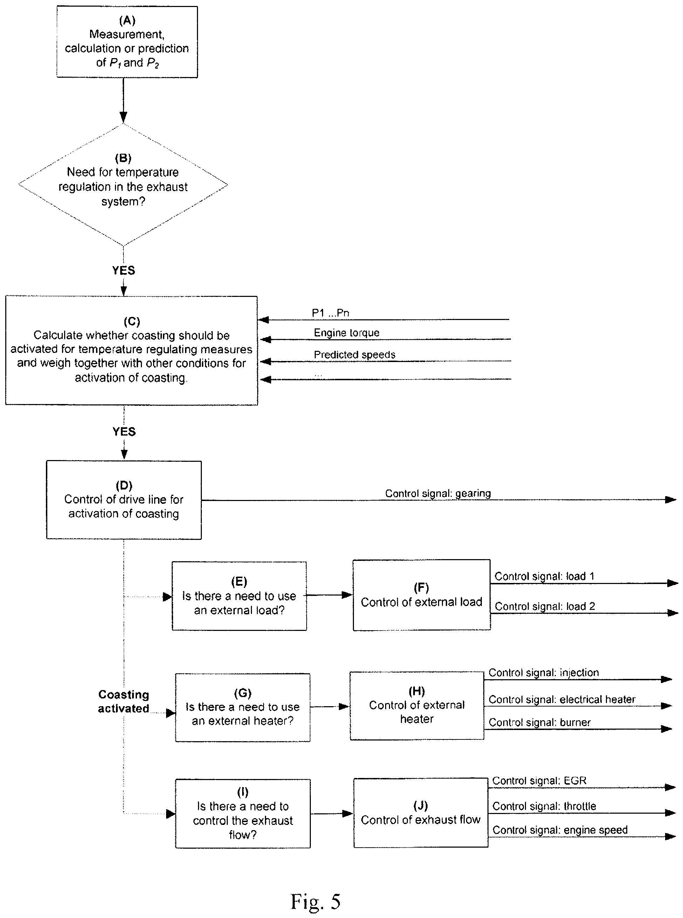

Further Fig. 5 shows a flow diagram of an exemplified embodiment of the method according to the invention:
A. At A, the first parameter *P*₁ from other sensor signals (virtual sensor) is measured or calculated. The first parameter *P*₁ may also be calculated over the road section ahead for the vehicle at A. Likewise, the second parameter *P*₂ is calculated at A.
B. Based on the value for the first parameter *P*₁ and the second parameter *P*₂, it is decided at B whether a temperature regulating measure needs to be taken. This may, for example, take place by a comparison of the first parameter *P*₁ and/or the second parameter *P*₂ with one or several threshold values, or by comparing several calculations of the first and second parameters with related control strategies, and based on these selecting which temperature regulations measure(s) that need(s) to be taken.
C. If a temperature measure is to be taken, it is calculated at C whether coasting is to be activated. Other parameters may also be taken into consideration in the calculation of whether or not coasting should be activated, such as requested engine power, requested engine torque, predicted speed, predicted road inclination, etc. As described above, other conditions for the activation of coasting should also be taken into consideration.
D. At D, the driveline is controlled so that coasting is activated, for example by engaging the gearbox in a neutral position, or by opening the clutch device.
E. At E, a check as to whether an external load needs to be used to regulate the temperature in the exhaust system is carried out.
F. If an external load needs to be used, the external load is controlled at F so that the desired engine load is achieved.
G. At E, a check as to whether an external heater needs to be used to regulate the temperature in the exhaust system is carried out.
H. If an external heater needs to be used, one or several external heaters are controlled at H, so that the desired temperature is achieved in the exhaust stream, for example by control of a burner, injection of hydrocarbons in the exhausts or an electric heater.
I. At I, a check as to whether the exhaust flow needs to be controlled in order to regulate the temperature in the exhaust system is carried out.
J. If the exhaust flow needs to controlled for the regulation of the temperature in the exhaust stream, the exhaust flow is controlled at J so that the desired exhaust flow is achieved, and indirectly makes it possible for the desired temperature to be achieved in the exhaust stream.

The present invention may also be implemented in a control system arranged to control all or parts of a driveline in a motor vehicle 100. Further, the system may comprise additional control devices arranged to control other functions such as external loads, external heaters, etc. Control devices of the type displayed are normally arranged to receive sensor signals from different parts of the vehicle as well as from other control devices. These control devices are also usually arranged to emit control signals to different vehicle parts and vehicle components. The control devices may also comprise, or be connected to, a calculation device arranged for the calculation/simulation of predicted parameter values.

Generally, control systems in modern vehicles consist of a communications bus system consisting of one or several communications buses for the connection of a number of electronic control devices (ECUs) or controllers 115, 208 and different components arranged on the vehicle. Such a control system may comprise a large number of control devices, and the responsibility for a specific function in the vehicle may be distributed among one or more control devices.

The control usually takes place with programmed instructions. These programmed instructions typically consist of a computer program, which, when it is executed in a computer or control device, causes the computer/control device to carry out the desired control, such as methods according to the present invention. The computer program usually consists of a computer program product, where the computer program product comprises an applicable storage medium 121 with the computer program 109 stored on the said storage medium 121. The said digital storage medium 121 may e.g. consist of any from the following group: ROM (Read-Only Memory), PROM (Programmable Read-Only Memory), EPROM (Erasable PROM), Flash, EEPROM (Electrically Erasable PROM), a hard disk unit, etc., and may be set up in or in combination with the control device, where the computer program is executed by the control device.

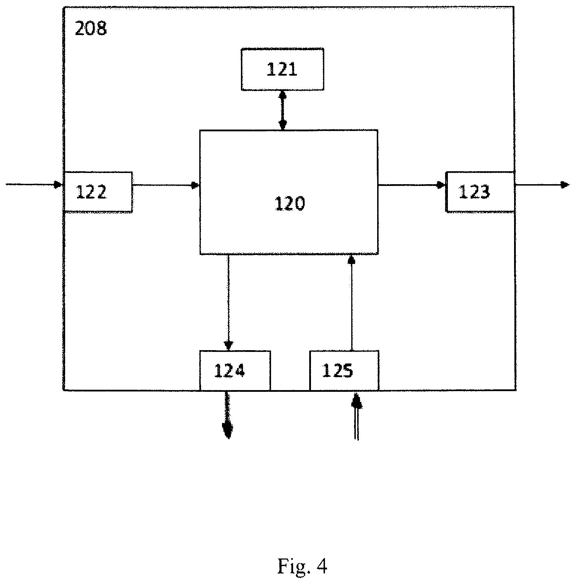

An example control device (control device 208) is displayed in the diagram in Fig. 4, and the control device in turn may comprise a calculation device 120, which may consist of e.g. a suitable type of processor or microcomputer, e.g. a circuit for digital signal processing (Digital Signal Processor, DSP), or a circuit with a predetermined specific function (Application Specific Integrated Circuit, ASIC). The calculation device 120 is connected to a memory device 121, which provides the calculation device with e.g. the stored program code 109 and/or the stored data which the calculation device needs in order to be able to carry out calculations. The calculation device is also arranged to store interim or final results of calculations in the memory device 121.

Further, the control device is equipped with elements/devices 122, 123, 124, 125 for receipt and sending of input and output signals, respectively. These input and output signals may contain waveforms, pulses, or other attributes, which may be detected by the devices for the receipt of input signals as information for processing by the calculation device 120. The devices 123, 124 for sending output signals are arranged to convert the calculation result from the calculation unit 120 to output signals for transfer to other parts of the vehicle's control system and/or the component(s) for which the signals are intended. Each one of the connections to the devices for receipt and sending of input and output signals may consist of one or several of cables; a data bus, such as a CAN (Controller Area Network) bus, a MOST (Media Oriented Systems Transport), or any other suitable bus configuration; or of a wireless communications connection.

More specifically, a (control) system according to the present invention comprises a control device arranged to control the driveline in a vehicle for the activation or deactivation of coasting based on one or several first parameters *P*₁ and one or several second parameters *P*₂ for the regulation of a temperature *T_{Ex}* in the said exhaust system, where at least one of the one or several first parameters *P*₁ is a first temperature difference between a first temperature *T*₁ in the said exhaust system and a reference temperature *T_{Ref}*, and the said second parameter *P*₂ is related to a calculated speed and/or a calculated road inclination over road sections ahead of the motor vehicle. As a person skilled in the art will realise, this system may be implemented in a control system described above. Further the present invention also pertains to a motor vehicle 100, such as a bus, a truck or a similar motor vehicle, comprising at least one system according to the above.

Finally, it should be realised that the present invention is not limited to the embodiments of the invention described above, but pertains to and comprises all embodiments within the protected scope of the enclosed independent claims.

## Claims

1. Method for the regulation of a temperature in an exhaust system in a motor vehicle (100) through control of its driveline, the motor vehicle (100) of which comprises: a driveline comprising a combustion engine (101) which may be connected to a gearbox (103) via a clutch device (106), and an exhaust system arranged for the removal of an exhaust stream from the said combustion engine (101); where the said method comprises the step:
- control of the said driveline for activation or deactivation of coasting based on one or several first parameters (*P*₁) and on one or several second parameters (*P*₂) for the regulation of a temperature (*T_{Ex}*) in the said exhaust system;
**characterised by** that:
at least one of the said one or several first parameters (*P*₁) is a first temperature difference between a first temperature (*T*₁) in the said exhaust system and a reference temperature (T*_{Ref}*), and
at least one of the said one or several second parameters (*P*₂) is related to a calculated speed and/or a calculated road inclination over the road section ahead for the said motor vehicle (100).

2. Method according to claim 1, where at least one another of the said one or several first parameters (*P*₁) is an another first temperature (*T*₁), or a second temperature difference between the said another first temperature (*T*₁) and a second temperature (*T*₂) in the said exhaust system.

3. Method according to claim 1 or 2, where at least one another of the said one or several first parameters (*P*₁) is a time derivative or a time integral of the said first temperature (*T*₁) or the said another first temperature (*T*₁) or the said first temperature difference or the said second temperature difference.

4. Method according to one of the previous claims, where at least one of the said one or several first parameters (*P*₁) is calculated over the road section ahead of the said motor vehicle (100) based on one or several vehicle-specific and/or road-specific data for the said motor vehicle (100).

5. Method according to claim 4, where the said vehicle-specific and/or road-specific data are selected from the group comprising: a road inclination, curve radii, speed limits; a weight for the said motor vehicle (100); a rolling resistance; an air resistance; engine specific data such as maximum output, minimum output, maximum torque, minimum torque, exhaust flow, exhaust gas recirculation content, lambda values, and injection parameters.

6. Method according to any of claims 2-5, where the said another first temperature (*T*₁) is a temperature in the said exhaust stream and the said second temperature (*T*₂) is a surface, liquid or substrate temperature in the said exhaust system.

7. Method according to any of the previous claims, where coasting is activated if a value for at least one of the said one or several first parameters (*P*₁) and/or the said one or several second parameters (*P*₂) is below a threshold value (*P_{T}*)*.*

8. Method according to any of the previous claims, where the control of the said driveline for activation or deactivation of coasting is also based on a requested engine power and/or a requested engine torque.

9. Method according to any of the previous claims, where coasting is activated through:
- engaging the said gearbox (103) in a neutral gear, or
- opening of the said clutch device (106).

10. Method according to any of the previous claims, where the method also comprises, when coasting is activated:
- control of at least one external load to increase or reduce the said temperature (*T_{Ex}*) in the said exhaust system based on the said one or several first parameters (*P*₁), the external load of which is installed on an engine side of the said clutch device (106)/gearbox (103).

11. Method according to claim 10, where the said external load is one or several external loads selected from the group comprising: auxiliaries such as a water pump, fan or compressor; generator; hybrid generator or similar energy recycling system; retarder, exhaust brake or other auxiliary brakes.

12. Method according to claim 11, where the said external load is increased if the said temperature (*T_{Ex}*) in the said exhaust system is to be increased.

13. Method according to any of the previous claims, where the method also comprises, when coasting is activated:
- control of an external system arranged for the conversion of exhaust heat into energy (WHR) based on the said one or several first parameters (*P*₁) for regulation of the said temperature (*T_{Ex}*) in the said exhaust system.

14. Method according to claim 13, where the said external system is installed upstream of an area in the said exhaust system in which a temperature is desired to be obtained; and the said external system is controlled so that it operates in a normal mode if the said temperature (*T_{Ex}*) in the said exhaust system is to be reduced, and in an opposite mode if the said temperature (*T_{Ex}*) in the said exhaust system is to be increased.

15. Method according to any of the previous claims, where the method also comprises, when coasting is activated:
- control of at least one external heater based on the said one or several first parameters (*P*₁) for the reduction or increase of the said temperature (*T_{Ex}*) in the said exhaust system.

16. Method according to claim 15, where the said external heater is one selected from the group comprising: a burner installed in the said exhaust system after the said combustion engine's (101) cylinders; a system arranged for the injection of hydrocarbons for the oxidation or combustion on a catalyst placed in the said exhaust system; an electric heater installed in the said exhaust system after the said combustion engine's (101) cylinders; and another external heater installed in or in close connection to the said exhaust system.

17. Method according to any of the previous claims, where the method also comprises, when coasting is activated:
- control of a fuel injection system arranged for the injection of fuel to the said combustion engine (101) based on the said one or several first parameters (*P*₁) for regulation of the said temperature (*T_{Ex}*) in the said exhaust system

18. Method according to any of the previous claims, where the method also comprises, when coasting is activated:
- control of an exhaust flow in the said exhaust steam, or of a parameter dependent on the said exhaust flow such as heat transfer coefficients, based on the said one or several first parameters (*P*₁) for regulation of the said temperature (*T_{Ex}*) in the said exhaust system.

19. Method according to claim 18, where the control of the said exhaust stream comprises:
- control of a gas flow system for exhaust gas recirculation (EGR) arranged for the said combustion engine (101) based on the said one or several parameters (*P*₁) for regulation of the said temperature (*T_{Ex}*) in the said exhaust system; and/or
- control of an intake system arranged for the regulation of an air flow into the said combustion engine (101) based on the said one or several first parameters (*P*₁) for regulation of the said temperature (*T_{Ex}*) in the said exhaust system.

20. Method according to claim 19, where the control of the said gas flow system for exhaust gas recirculation (EGR) and/or control of the said intake system is also based on one or several additional parameters related to a transferred output to a component installed in the said exhaust system and/or emissions produced by the said combustion engine (101).

21. Method according to claim 18, where the control of the said exhaust stream comprises:
- increase of an engine speed in the said combustion engine (101), and thus an increase of the said exhaust flow, if a value for the said one or several first parameters (*P*₁) exceeds a first threshold value; and
- reduction of an engine speed in the said combustion engine (101), and thus a reduction of the said exhaust flow, if a value for the said one or several first parameters (*P*₁) is below a second threshold value.

22. Method according to any of the previous claims, where the said reference temperature (*T_{Ref}*) is one of a temperature in a component of the said exhaust system, a temperature of a liquid injected in the said exhaust system, or a temperature of a component installed in connection with the said exhaust system.

23. Computer program (109) comprising a program code which, when the said program code is executed in a computer (115, 208, 120), achieves that the said computer (115, 208, 120) carries out the method according to any of the previous claims.

24. Computer program product including a computer readable medium (121) and a computer program (109) according to claim 23, where the said computer program (109) is included in the said computer readable medium (121).

25. System arranged for the control of a driveline in a motor vehicle (100), the motor vehicle (100) of which comprises: a driveline comprising a combustion engine (101) which may be connected to a gearbox (103) via a clutch device (106), and an exhaust system arranged for the removal of an exhaust stream from the said combustion engine (101); where the said system comprises a control device (115, 208, 120) arranged to control the said driveline for activation or deactivation of coasting based on one or several first parameters (*P*₁) and one or several second parameters (*P*₂) for regulation of a temperature (*T_{Ex}*) in the said exhaust system, the said system being **characterised by** that
at least one of the said one or several first parameters (*P*₁) is a first temperature difference between a first temperature (*T*₁) in the said exhaust system and a reference temperature (*T_{Ref}*), and
at least one of the said one or several second parameters (*P*₂) is related to a calculated speed and/or a calculated road inclination over the road section ahead for the said motor vehicle.

26. Motor vehicle (100) comprising at least one system according to claim 25.

## Patentansprüche

1. Verfahren zur Regelung einer Temperatur in einem Abgassystem eines Kraftfahrzeugs (100) durch Steuerung des Antriebsstrangs, wobei das Kraftfahrzeug (100) aufweist: einen Antriebsstrang mit einem Verbrennungsmotor (101), der über eine Kupplungseinrichtung (106) mit einem Getriebe (103) verbunden sein kann, und ein Abgassystem, das zum Abführen eines Abgasstroms aus dem Verbrennungsmotor (101) eingerichtet ist, wobei das Verfahren den Schritt aufweist:
- Steuern des Antriebsstrangs zum Aktivieren oder Deaktivieren des Leerlaufs auf Basis eines oder mehrerer erster Parameter (*P*₁) und eines oder mehrerer zweiter Parameter *(P*₂*)* für die Regelung einer Temperatur (*T_{Ex}*) in diesem Abgassystem; **dadurch gekennzeichnet, dass**
mindestens einer des einen oder der mehreren ersten Parameter (*P*₁) eine erste Temperaturdifferenz zwischen einer ersten Temperatur (*T*₁) in diesem Abgassystem und einer Referenztemperatur (T*_{Ref}*) ist, und
mindestens einer des einen oder der mehreren zweiten Parameter *(P*₂*)* mit einer berechneten Geschwindigkeit und/oder einer berechneten Steigung über den Straßenabschnitt vor dem Kraftfahrzeug (100) in Beziehung steht.

2. Verfahren nach Anspruch 1, wobei mindestens ein anderer des einen oder der mehreren ersten Parameter (*P*₁) eine andere erste Temperatur (*T*₁) oder eine zweite Temperaturdifferenz zwischen der anderen ersten Temperatur (*T*₁) und einer zweiten Temperatur (*T*₂) in diesem Abgassystem ist.

3. Verfahren nach Anspruch 1 oder 2, wobei mindestens ein anderer des einen oder der mehreren ersten Parameter (*P*₁) eine zeitliche Ableitung oder ein zeitliches Integral der ersten Temperatur (*T*₁) oder der anderen ersten Temperatur (*T*₁) oder der ersten Temperaturdifferenz oder der zweiten Temperaturdifferenz ist.

4. Verfahren nach einem der vorigen Ansprüche 1 bis 3, wobei mindestens einer des einen oder der mehreren ersten Parameter (*P*₁) über den Straßenabschnitt vor dem Kraftfahrzeug (100) auf Basis eines oder mehrerer fahrzeugspezifischer und/oder straßenspezifischer Daten für das Kraftfahrzeug (100) berechnet wird.

5. Verfahren nach Anspruch 4, wobei die fahrzeugspezifischen und/oder straßenspezifischen Daten aus der Gruppe gewählt werden, die umfasst: Straßenneigung, Kurvenradien, Geschwindigkeitsbeschränkungen; Gewicht des Kraftfahrzeugs (100); Rollwiderstand; Luftwiderstand; spezifische Daten des Verbrennungsmotors wie maximale Leistung, minimale Leistung, maximales Drehmoment, minimales Drehmoment, Abgasdurchsatz, Abgasrückführungsanteil, Lambda-Werte und Einspritzungsparameter.

6. Verfahren nach einem der Ansprüche 2 bis 5, wobei die andere erste Temperatur (*T*₁) eine Temperatur im Abgasstrom und die zweite Temperatur (*T*₂) eine Oberflächen-, Flüssigkeits- oder Substrattemperatur in diesem Abgassystem ist.

7. Verfahren nach einem der vorigen Ansprüche, wobei der Leerlauf aktiviert ist, wenn ein Wert für mindestens einen des einen oder der mehreren erste Parameter (*P*₁) und/oder des einen oder der mehreren zweiten Parameter *(P*₂*)* unter einem Schwellenwert (*P_{T}*) liegt.

8. Verfahren nach einem der vorigen Ansprüche, wobei die Steuerung des Antriebsstrangs zum Aktivieren oder Deaktivieren des Leerlaufs außerdem auf einer angeforderten Leistung und/oder einem angeforderten Drehmoment des Verbrennungsmotors basiert.

9. Verfahren nach einem der vorigen Ansprüche, wobei der Leerlauf aktiviert wird durch:
- Schalten des Getriebes (103) in einen Leerlaufgang, oder
- Lösen der Kupplungseinrichtung (106).

10. Verfahren nach einem der vorigen Ansprüche, wobei das Verfahren bei aktiviertem Leerlauf außerdem aufweist:
- Steuern mindestens einer externen Last, um die Temperatur (*T_{Ex}*) in diesem Abgassystem auf Basis des einen oder der mehreren ersten Parameter (*P*₁) zu erhöhen oder zu verringern, wobei die externe Last an der Seite des Verbrennungsmotors der Kupplungseinrichtung (106)/des Getriebes (103) installiert ist.

11. Verfahren nach Anspruch 10, wobei die externe Last aus einer oder mehreren externen Lasten besteht, die aus der Gruppe gewählt werden, die umfasst: Zusatzeinrichtungen wie eine Wasserpumpe, ein Gebläse oder ein Kompressor; Generator; Hybrid-Generator oder ein ähnliches Energie-Rückgewinnungssystem; Motorbremse, Auspuffbremse oder andere zusätzliche Bremsen.

12. Verfahren nach Anspruch 10, wobei die externe Last erhöht wird, wenn die Temperatur (T_{Ex}) im Abgassystem erhöht werden soll.

13. Verfahren nach einem der vorigen Ansprüche, wobei das Verfahren bei aktiviertem Leerlauf außerdem aufweist:
- Steuern eines externen Systems, das zum Wandeln der Abgaswärme in Energie (WHR) auf Basis des einen oder der mehreren ersten Parameter (*P*₁) zur Regelung der Temperatur (*T_{Ex}*) in diesem Abgassystem eingerichtet ist.

14. Verfahren nach Anspruch 13, wobei das externe System stromaufwärts eines Bereichs in diesem Abgassystem installiert ist, in dem eine gewünschte Temperatur erreicht werden soll; und wobei das externe System so gesteuert wird, dass es in einem Normalmodus arbeitet, wenn die Temperatur (*T_{Ex}*) in diesem Abgassystem verringert werden soll, und in einem entgegengesetzten Modus, wenn die Temperatur (*T_{Ex}*) in diesem Abgassystem erhöht werden soll.

15. Verfahren nach einem der vorigen Ansprüche, wobei das Verfahren bei aktiviertem Leerlauf außerdem aufweist:
- Steuern mindestens einer externen Heizeinrichtung auf Basis des einen oder der mehreren ersten Parameter (*P*₁), um die Temperatur (*T_{Ex}*) in diesem Abgassystem zu verringern oder zu erhöhen.

16. Verfahren nach Anspruch 15, wobei die externe Heizeinrichtung aus der Gruppe gewählt wird, die umfasst: einen Brenner, der im Abgassystem nach den Zylindern des Verbrennungsmotors (101) installiert ist; ein auf einem Katalysator im Abgassystem angeordnetes System zur Einspritzung von Kohlenwasserstoffen für die Oxidation oder Verbrennung; eine elektrische Heizeinrichtung, die im Abgassystem nach den Zylindern des Verbrennungsmotors (101) installiert ist; und eine andere externe Heizeinrichtung, die im Abgassystem oder nahe des Abgassystems installiert ist.

17. Verfahren nach einem der vorigen Ansprüche, wobei das Verfahren bei aktiviertem Leerlauf außerdem aufweist:
- Steuern eines Kraftstoffeinspritzsystems, das zur Einspritzung von Kraftstoff in den Verbrennungsmotor (101) auf Basis des einen oder der mehreren ersten Parameter (*P*₁) zur Regelung der Temperatur (*T_{Ex}*) in diesem Abgassystem eingerichtet ist.

18. Verfahren nach einem der vorigen Ansprüche, wobei das Verfahren bei aktiviertem Leerlauf außerdem aufweist:
- Steuern des Abgasdurchsatzes im Abgasstrom oder eines Parameters in Abhängigkeit vom Abgasdurchsatz wie von Wärmeübertragungskoeffizienten auf Basis des einen oder der mehreren ersten Parameter (*P*₁) zur Regelung der Temperatur (*T_{Ex}*) in diesem Abgassystem.

19. Verfahren nach Anspruch 18, wobei die Steuerung des Abgasstroms aufweist:
- Steuern eines Gasstromsystems zur Abgasrückführung (EGR) für den Verbrennungsmotor (101) auf Basis des einen oder der mehreren ersten Parameter (*P*₁) zur Regelung der Temperatur (*T_{Ex}*) in diesem Abgassystem; und/oder
- Steuern eines Einlasssystems, das zur Regelung eines Luftdurchsatzes in den Verbrennungsmotor (101) auf Basis des einen oder der mehreren ersten Parameter (*P*₁) zur Regelung der Temperatur (*T_{Ex}*) in diesem Abgassystem eingerichtet ist.

20. Verfahren nach Anspruch 19, wobei die Steuerung des Gasstromsystems zur Abgasrückführung (EGR) und/oder die Steuerung des Einlasssystems außerdem auf einem oder mehreren zusätzlichen Parametern basiert, die mit einer auf eine im Abgassystem installierte Komponente übertragene Leistung und/oder mit Emissionen des Verbrennungsmotors (101) in Beziehung stehen.

21. Verfahren nach Anspruch 18, wobei die Steuerung des Abgasstroms aufweist:
- Erhöhen der Drehzahl des Verbrennungsmotors (101) und damit Erhöhen des Abgasdurchsatzes, wenn ein Wert des einen oder der mehreren ersten Parameter (*P*₁) einen ersten Schwellenwert überschreitet; und
- Verringern der der Drehzahl des Verbrennungsmotors (101) und damit Verringern des Abgasdurchsatzes, wenn ein Wert des einen oder der mehreren ersten Parameter (*P*₁) einen zweiten Schwellenwert unterschreitet.

22. Verfahren nach einem der vorigen Ansprüche, wobei die Referenztemperatur (T*_{Ref}*) entweder eine Temperatur in einer Komponente des Abgassystems, eine Temperatur einer in das Abgassystem eingespritzten Flüssigkeit oder eine Temperatur einer Komponente ist, die in Verbindung mit dem Abgassystem installiert ist.

23. Computerprogramm (109), das einen Programmcode enthält, mit dem bei Ausführung des Programmcodes in einem Computer (115, 208, 120) erreicht wird, dass der Computer (115, 208, 120) das Verfahren gemäß einem der vorigen Ansprüche ausführt.

24. Computerprogrammprodukt mit einem computerlesbaren Medium (121) und einem Computerprogramm (109) gemäß Anspruch 23, wobei das computerlesbare Medium das Computerprogramm beinhaltet.

25. System zur Steuerung eines Antriebsstrangs eines Kraftfahrzeugs (100), wobei das Kraftfahrzeug (100) aufweist: einen Antriebsstrang mit einem Verbrennungsmotor (101), der über eine Kupplungseinrichtung (106) mit einem Getriebe (103) verbunden sein kann, und ein Abgassystem, das zum Abführen eines Abgasstroms aus dem Verbrennungsmotor (101) eingerichtet ist; wobei das System eine Steuerungseinrichtung (115, 208, 120) zur Steuerung des Antriebsstrangs zum Aktivieren oder Deaktivieren des Leerlaufs auf Basis eines oder mehrerer erster Parameter (*P*₁) und eines oder mehrerer zweiter Parameter (*P*₂) für die Regelung einer Temperatur (*T_{Ex}*) in diesem Abgassystem enthält, **dadurch gekennzeichnet, dass**
mindestens einer des einen oder der mehreren ersten Parameter (*P*₁) eine erste Temperaturdifferenz zwischen einer ersten Temperatur (*T*₁) in diesem Abgassystem und einer Referenztemperatur (T*_{Ref}*) ist, und
mindestens einer des einen oder der mehreren zweiten Parameter (*P*₂) mit einer berechneten Geschwindigkeit und/oder einer berechneten Steigung über den Straßenabschnitt vor dem Kraftfahrzeug (100) in Beziehung steht.

26. Kraftfahrzeug (100), das mindestens ein System nach Anspruch 25 aufweist.

## Revendications

1. Procédé de régulation d'une température dans un système d'échappement d'un véhicule à moteur (100) par contrôle de sa chaîne de traction, le véhicule à moteur (100) comprenant : une chaîne de traction qui comprend un moteur à combustion (101) qui peut être connecté à une boîte de vitesses (103) via un dispositif d'embrayage (106), et un système d'échappement agencé pour évacuer un flux d'échappement dudit moteur à combustion (101), ledit procédé comprenant l'étape de :
- contrôler ladite chaîne de traction pour activer ou désactiver la marche au point mort, sur la base d'un ou de plusieurs premiers paramètres (P₁) et d'un ou de plusieurs second paramètres (P₂) pour réguler une température (T_{Ex}) dans ledit système d'échappement ;
**caractérisé en ce que** :
au moins l'un dudit ou desdits premiers paramètres (P₁) est une première différence de température entre une première température (T₁) dans ledit système d'échappement et une température de référence (T_{Ref}), et
au moins l'un dudit ou desdits seconds paramètres (P₂) est associé à une vitesse calculée et/ou à une inclinaison de route calculée sur la section de route devant ledit véhicule à moteur (100).

2. Procédé selon la revendication 1, dans lequel au moins un autre dudit ou desdits plusieurs premiers paramètres (P₁) est une autre première température (T₁), ou une seconde différence de température entre ladite autre première température (T₁) et une seconde température (T₂) dans ledit système d'échappement.

3. Procédé selon la revendication 1 ou 2, dans lequel au moins un autre dudit ou desdits plusieurs premiers paramètres (P₁) est une dérivée par rapport au temps ou une intégrale par rapport au temps de ladite première température (T₁) ou ladite autre première température (T₁) ou ladite première différence de température ou ladite seconde différence de température.

4. Procédé selon l'une des revendications précédentes, dans lequel au moins l'un dudit ou desdits plusieurs premiers paramètres (P₁) est calculé sur la section de route devant ledit véhicule à moteur (100) sur la base d'une ou de plusieurs données spécifiques du véhicule et/ou spécifiques de la route pour ledit véhicule à moteur (100).

5. Procédé selon la revendication 4, dans lequel lesdites données spécifiques du véhicule et/ou spécifiques de la route sont sélectionnées dans le groupe comprenant : une inclinaison de route, un rayon de virage, des limites de vitesse ; un poids dudit véhicule à moteur (100) ; une résistance au roulement ; une résistance à l'air ; des données spécifiques du moteur telles qu'une puissance maximum, une puissance minimum, un couple maximum, un couple minimum, un débit d'échappement, un contenu de recirculation des gaz d'échappement, des valeurs lambda et des paramètres d'injection.

6. Procédé selon l'une quelconque des revendications 2 à 5, dans lequel ladite autre première température (T₁) est une température dans ledit flux d'échappement et ladite seconde température (T₂) est une température de surface, de liquide ou de substrat dans ledit système d'échappement.

7. Procédé selon l'une quelconque des revendications précédentes, dans lequel la marche au point mort est activée si une valeur d'au moins l'un desdits un ou plusieurs premiers paramètres (P₁) et/ou dudit ou desdits plusieurs seconds paramètres (P₂) est inférieure à une valeur de seuil (P_{T}).

8. Procédé selon l'une quelconque des revendications précédentes, dans lequel le contrôle de ladite chaîne de traction pour activer ou désactiver la marche au point mort est aussi basé sur une puissance moteur demandée et/ou un couple moteur demandé.

9. Procédé selon l'une quelconque des revendications précédentes, dans lequel la marche au point mort est activée :
- en engageant ladite boîte de vitesses (103) au point mort, ou
- en ouvrant ledit dispositif d'embrayage (106).

10. Procédé selon l'une quelconque des revendications précédentes, dans lequel le procédé comprend aussi, lorsque la marche au point mort est activée :
- un contrôle d'au moins une charge externe pour augmenter ou réduire ladite température (T_{Ex}) dans ledit système d'échappement sur la base dudit ou desdits plusieurs premiers paramètres (P₁), la charge externe étant installée sur un côté moteur dudit dispositif d'embrayage (106) / de ladite boîte de vitesses (103).

11. Procédé selon la revendication 10, dans lequel ladite charge externe est une ou plusieurs charges sélectionnées dans le groupe comprenant : des organes auxiliaires, comme une pompe à eau, un ventilateur ou un compresseur ; une génératrice ; une génératrice hybride ou un système de recyclage d'énergie similaire ; un retardateur, un frein sur échappement ou d'autres freins auxiliaires.

12. Procédé selon la revendication 11, dans lequel ladite charge externe est augmentée si ladite température (T_{Ex}) dans ledit système d'échappement doit être augmentée.

13. Procédé selon l'une quelconque des revendications précédentes, dans lequel le procédé comprend également, lorsque ladite marche au point mort est activée :
- un contrôle d'un système externe agencé pour convertir de la chaleur d'échappement en énergie (WHR) sur la base dudit ou desdits premiers paramètres (P₁) pour réguler ladite température (T_{Ex}) dans ledit système d'échappement.

14. Procédé selon la revendication 13, dans lequel ledit système externe est installé en amont d'une zone dans ledit système d'échappement dans laquelle on souhaite obtenir une température ; et ledit système externe est contrôlé de façon telle qu'il fonctionne dans un mode normal si ladite température (T_{Ex}) dans ledit système d'échappement doit être réduite, et dans un mode opposé si ladite température (T_{Ex}) dans ledit système d'échappement doit être augmentée.

15. Procédé selon l'une quelconque des revendications précédentes, dans lequel le procédé comprend également, lorsque la marche au point mort est activée :
- un contrôle d'au moins un chauffage externe sur la base dudit ou desdits plusieurs premiers paramètres (P₁) pour réduire ou augmenter ladite température (T_{Ex}) dans ledit système d'échappement.

16. Procédé selon la revendication 15, dans lequel ledit chauffage externe est un chauffage externe sélectionné dans le groupe comprenant : une chambre de combustion installée dans ledit système d'échappement après lesdits cylindres du moteur à combustion (101) ; un système agencé pour l'injection d'hydrocarbures pour l'oxydation ou la combustion sur un catalyseur placé dans ledit système d'échappement ; un chauffage électrique installé dans ledit système d'échappement après lesdits cylindres du moteur à combustion (101) ; et un autre chauffage externe installé dans ou à en relation étroite avec ledit système d'échappement.

17. Procédé selon l'une quelconque des revendications précédentes, dans lequel le procédé comprend également, lorsque la marche au point mort est activée :
- un contrôle d'un système d'injection de carburant agencé pour l'injection de carburant dans ledit moteur à combustion (101) sur la base dudit ou desdits plusieurs premiers paramètres (P₁) pour la régulation de ladite température (T_{Ex}) dans ledit système d'échappement.

18. Procédé selon l'une quelconque des revendications précédentes, dans lequel le procédé comprend aussi, lorsque la marche au point mort est activée :
- un contrôle d'un débit d'échappement dans ledit flux d'échappement, ou d'un paramètre qui dépend du débit d'échappement, tel que des coefficients de transfert thermique, sur la base dudit ou desdits premiers paramètres (P₁) pour réguler ladite température (T_{Ex}) dans ledit système d'échappement.

19. Procédé selon la revendication 18, dans lequel le contrôle dudit flux d'échappement comprend :
- un contrôle d'un système de circulation de gaz pour la recirculation des gaz d'échappement (EGR) agencé pour ledit moteur à combustion (101), sur la base dudit ou desdits plusieurs paramètres (P₁) pour réguler ladite température (T_{Ex}) dans ledit système d'échappement ; et/ou
- un contrôle d'un système d'admission agencé pour la régulation d'un débit d'air dans ledit moteur à combustion (101) sur la base dudit ou desdits plusieurs premiers paramètres (P₁) pour réguler ladite température (T_{Ex}) dans ledit système d'échappement.

20. Procédé selon la revendication 19, dans lequel le contrôle dudit système de circulation de gaz pour la recirculation des gaz d'échappement (EGR) et/ou le contrôle dudit système d'admission est aussi basé sur un ou plusieurs paramètres supplémentaires liés à une sortie transférée vers un composant installé dans ledit système d'échappement et/ou aux émissions produites par ledit moteur à combustion (101).

21. Procédé selon la revendication 18, dans lequel le contrôle dudit flux d'échappement comprend :
- une augmentation d'une vitesse moteur dans ledit moteur à combustion (101), et par conséquent une augmentation du débit d'échappement, si une valeur dudit ou desdits plusieurs premiers paramètres (P₁) excède une première valeur de seuil ; et
- une réduction d'une vitesse moteur dans ledit moteur à combustion (101), et par conséquent une réduction du débit d'échappement si une valeur dudit ou desdits plusieurs premiers paramètres (P₁) est inférieure à une seconde valeur de seuil.

22. Procédé selon l'une quelconque des revendications précédentes, dans lequel ladite température de référence (T_{Ref}) est une température dans un composant dudit système d'échappement, une température d'un liquide injecté dans ledit système d'échappement ou une température d'un composant installé en connexion avec ledit système d'échappement.

23. Programme informatique (109) comprenant un code de programme qui, lorsque ledit code de programme est exécuté dans un ordinateur (105, 208, 120), fait que ledit ordinateur (105, 208, 120) exécute le procédé selon l'une quelconque des revendications précédentes.

24. Produit avec programme informatique comprenant un support lisible par un ordinateur (121) et un programme informatique (109) selon la revendication 23, ledit programme informatique (109) étant inclus dans ledit support lisible par ordinateur (121).

25. Système agencé pour le contrôle d'une chaîne de traction dans un véhicule à moteur (100), le véhicule à moteur (100) comprenant : une chaîne de traction qui comprend un moteur à combustion (101) qui peut être connecté à une boîte de vitesses (103) via un dispositif d'embrayage (106), et un système d'échappement agencé pour éliminer le flux d'échappement dudit moteur à combustion (101) ; ledit système comprenant un dispositif de contrôle (115, 208, 120) agencé pour contrôler ladite chaîne de traction afin d'activer ou de désactiver une marche au point mort sur la base d'un ou de plusieurs premiers paramètres (P₁) et d'un ou de plusieurs seconds paramètres (P₂) pour réguler une température (T_{Ex}) dans ledit système d'échappement, ledit système étant **caractérisé en ce que** :
au moins l'un dudit ou desdits plusieurs premiers paramètres (P₁) est une première différence de température entre une première température (T₁) dans ledit système d'échappement et une température de référence (T_{Ref}), et au moins l'un dudit ou desdits plusieurs seconds paramètres (P₂) est lié à une vitesse calculée et/ou à une inclinaison de route calculée sur la section de route devant ledit véhicule à moteur.

26. Véhicule à moteur (100) comprenant au moins un système selon la revendication 25.
